# EUROPÄISCHE PATENTSCHRIFT

(11) **EP 2 904 149 B1**
(45) Veröffentlichungstag und Bekanntmachung des Hinweises auf die Patenterteilung: **29.11.2017**
(21) Anmeldenummer: 13765324.2
(22) Anmeldetag: 11.09.2013
(51) Int. Cl.: E01B 7/24, F28D 15/02

(54) **WÄRMEÜBERTRAGER FÜR WEICHEN UND WEICHENHEIZEINRICHTUNG**
HEAT EXCHANGER FOR SWITCHES AND SWITCH HEATING SYSTEM
ÉCHANGEUR DE CHALEUR POUR AIGUILLES ET DISPOSITIF DE CHAUFFAGE D'AIGUILLES

(30) Priorität: 13.09.2012 DE 102012108585
(43) Veröffentlichungstag der Anmeldung: 12.08.2015
(73) Patentinhaber: PINTSCH BAMAG ANTRIEBS- und VERKEHRSTECHNIK GmbH, 46537 Dinslaken (DE)
(72) Erfinder: SCHINK, Damian, 46539 Dinslaken (DE)
(74) Vertreter: Patentanwälte Olbricht Buchhold Keulertz
(86) Internationale Anmeldenummer: PCT/EP2013/068854
(87) Internationale Veröffentlichungsnummer: WO 2014/041041

(56) Entgegenhaltungen:
- EP-A2- 0 247 693
- WO-A1-2008/131732
- WO-A1-2009/109664
- GB-A- 2 417 508

## Beschreibung

Die Erfindung betrifft einen Wärmeübertrager für Weichen gemäß dem Oberbegriff von Anspruch 1, einen Gleitstuhl mit einem solchen Wärmeübertrager nach Anspruch 8, sowie eine Weichenheizeinrichtung mit einem solchen Wärmeübertrager nach Anspruch 15. Es ist bekannt, Weichen im Eisenbahnbau im Winter zu beheizen, um ein Einfrieren oder Einschneien der beweglichen Teile, insbesondere der quer zum Gleisverlauf schwenkbaren Weichenzunge, zu verhindern. Das Stellen der Weichenzunge erfolgt mittels wenigstens eines Antriebs in wenigstens einem Verschlussfach. Dabei ist die Weichenzunge auf sogenannten Gleitstühlen gelagert, welche auf den Schwellen angeordnet sind und eine Gleitfläche für die Weichenzunge ausbilden. Zusätzlich oder alternativ kommen Gleitstühle mit Rollen zum Einsatz. Sowohl auf dem Verschlussfach, den Gleitstühlen als auch in den Schwellenzwischenräumen kann sich Schnee und Eis ansammeln. Kritisch sind weiterhin enge Gleisstegabstände an Schienenkreuzungen. Auch diese werden daher beheizt.

Zur Beheizung von Weichen oder Schienenkreuzungen existieren elektrisch betriebene Heizungen, so z.B. in DE 43 25 001 A1 beschrieben, oder seltener Heizungen mit Gas- oder Ölbrennern. Weichenheizeinrichtungen dieser Techniken haben einen hohen Energieverbrauch einhergehend mit hohen Energiekosten. Zur Energieeinsparung werden daher teilweise Steuerungen eingesetzt, sodass die Anlagen nicht permanent unterhalb einer bestimmten Temperatur beheizt werden. Diese berücksichtigen auch Parameter wie die Luftfeuchtigkeit, um die Weichenheizung ein- oder auszuschalten. Dies funktioniert jedoch nicht bei allen Wetterlagen korrekt. Ein anderer Nachteil dieser Techniken ist ein hoher Energieverlust durch Wärmeabstrahlung an die Umgebung. Nur ein Bruchteil der erzeugten Wärme erreicht das zu schmelzende Eis.

Ökologisch initiierte Ansätze sehen Weichenheizeinrichtungen mit regenerativen Brennstoffen wie Rapsöl vor. Öl, Rapsöl und Gas haben jedoch jeweils den Nachteil, dass sie dem Ort der Verbrennung zugeführt werden müssen. Entweder werden hierfür wartungsintensive lokale Tanks oder ein Verteilernetz benötigt. Dies ist aufwendig und teuer.

Ein weiterer bekannter Ansatz ist die Beheizung von Weichen mit Erdwärme. Dies wird beispielsweise von L.L. Vasiliev in einer Veröffentlichung vom 07. Juli 1987 mit dem Titel "Heat Pipes for Ground Heating and Cooling" beschrieben. Ein Rohrsystem enthält hier ein Wärmeträgermedium und unterteilt sich in einen im Erdreich liegenden Verdampferbereich, einen an der Weiche entlanggeführten sowie rohrförmigen Kondensationsbereich und einen dazwischen liegenden Transportbereich. Das Wärmeträgermedium wird im Verdampferbereich erwärmt und verdampft. Anschließend steigt es aufgrund der geringeren Dichte nach oben, insbesondere durch den Transportbereich hindurch zum Kondensationsbereich. Bei geringen Umgebungstemperaturen kondensiert das Wärmeträgermedium schließlich im rohrförmigen Kondensationsbereich und gibt Wärme an die Rohrwandung ab. Letztere ist thermisch mit der Weiche, insbesondere einem Schienensteg oder einem Schienenfuß gekoppelt. An die Schiene und/oder den rohrförmigen Kondensationsbereich angrenzender Schnee oder Eis werden dann geschmolzen. Problematisch ist der geringe Schmelzradius um die geheizten Teile. So kommt es trotz der Beheizung zu einem Ansammeln von Schnee oder Eis zwischen dem Schienensteg und der Weichenzunge, wobei letztere blockiert werden kann.

Dieses Problem besteht auch dann, wenn der Kondensationsbereich unter Verwendung von Wärmeleitpaste an den Schienensteg geschraubt wird oder etwa die Schienenstege auf der Außenseite gegen Wärmeabstrahlung isoliert sind, wie es beispielsweise WO 2008/131732 A1 vorschlägt.

WO 2008/131732 A1 sieht weiterhin vor, dass ein gasdichter Wärmeübertrager eine Vielzahl an benachbarten Minikanälen in flächenhafter Anordnung aufweist. Hierdurch könne eine größere Fläche beheizt werden und der hierfür benötigte Bauraum wäre an einer Weiche vorhanden. Nachteilig sind jedoch hohe Fertigungskosten für die Einbringung der Minikanäle von 0,3 mm bis 6 mm in den Wärmeübertrager. Diese können aufgrund des geringen Abstands zueinander nur einzeln eingebracht werden. Bohrungen sind zudem nur linear ausführbar, was die Gestaltungsfreiheit einschränkt. Die Minikanäle und damit der Wärmeübertrager sind teuer in der Fertigung und aufgrund aufwendiger Abdichtungen anfällig für Undichtigkeiten, welche zu einem Ausfall der Weichenheizeinrichtung führen können.

Skizzierte Ausbildungen des Wärmeübertragers mit einem Sickenblech zwischen einer Ober- und einer Unterschale zur Ausbildung der Minikanäle halten dem notwendigen Betriebsdruck bei Verwendung von umweltverträglichem Kohlendioxid bei einem Betriebsdruck von circa 45 bar nur bei sehr großen Wandstärken stand. Druckbedingte Verformungen des Wärmeübertragers können zu einer Blockade der Weichenzunge führen und sind unbedingt zu vermeiden. Außerdem ist die Herstellung der umlaufenden Dichtfläche zwischen Ober- und Unterschale teuer und anfällig für Undichtigkeiten. Nachteile der großen Wandstärke sind außerdem eine langsame Wärmeleitung durch die Wandung und hohe Materialkosten. Auch können die Minikanäle kaum durch ein Strangpressverfahren hergestellt werden, da hierfür notwendige Kerne in einer Matrize kaum stabil ausführbar sind. Außerdem wäre die Gestaltungsfreiheit des Wärmeübertragers erheblich einschränkt.

Eine andere Konzipierung eines Wärmeübertragers findet sich in EP 1 529 880 A1. Als Wärmeübertrager ist hier lediglich eine Platte vorgesehen, unter die bis zu drei Wärmerohre längs zum Schienenkörper wärmeleitend befestigt, jedoch nicht in die Platte integriert sind. Dies führt zu einer schlechten Wärmeübertragung an die Platte, wodurch Schnee und Eis nur langsam geschmolzen werden.

Aufgabe der Erfindung ist es daher, die Nachteile des Standes der Technik zu beseitigen und einen Wärmeübertrager bereitzustellen, der mit wenig Wärmeenergie viel Schnee- und Eis schmelzen kann, kostengünstig in großen Stückzahlen fertigbar ist, hohen Betriebsdrücken eines in ihm befindlichen Wärmeträgermediums möglichst ohne Verformungen standhält und hinsichtlich seines Bauraums geeignet ist, im Bereich einer Weiche, insbesondere einem Gleitstuhl, eingesetzt zu werden. Außerdem ist es Aufgabe der Erfindung, eine Weichenheizeinrichtung mit einem solchen Wärmeübertrager zu schaffen, welche entsprechend die gleichen Anforderungen erfüllt.

Hauptmerkmale der Erfindung sind in den Ansprüchen 1, 8 und 15 angegeben. Ausgestaltungen sind Gegenstand der Ansprüche 2 bis 7 und 9 bis 14. Bei einem Wärmeübertrager für Weichen, mit einer Kondensationskammer, die eine Kammerdecke und einen Kammerboden aufweist, und in welche eine Anschlussöffnung zur Verbindung mit einem Erdwärmerohr mündet, sieht die Erfindung vor, dass die Kondensationskammer innenliegend in einem einteilig gefertigten Hauptbauteil angeordnet ist.
Eine zuverlässige Betriebssicherheit wird so durch eine hohe Dichtigkeit und geringe Nacharbeitungskosten erreicht. Die innenliegende Ausbildung der Kondensationskammer ist besonders kostengünstig, da diese durch Gießen oder Sintern, insbesondere Lasersintern, hergestellt ist. Im Wesentlichen ist das Hauptbauteil erfindungsgemäß ein Gießteil oder ein Sinterteil. Nach dem Gießen oder Sintern sind nur kleinere Nacharbeiten am Bauteil notwendig. Insbesondere werden großflächige Dichtungspassungen vermieden. In der Regel ist es ausreichend, zunächst einmal nur die Anschlussöffnung mit einer planen Dichtfläche sowie einem Innengewinde zu versehen.
Bevorzugt ist die Anschlussöffnung hierfür bereits nach dem Gießen bzw. Sintern kreisförmig ausgebildet. Ein notwendiger Gießkern kann durch Zerstörung durch die Anschlussöffnung entfernt werden, insbesondere durch Ausblasen mit einem Gas und/oder Ausspülen mit einer Flüssigkeit. Das Hauptbauteil wird daher idealerweise mittels eines Gussverfahrens mit verlorener Form hergestellt. Durch ein solches Verfahren sind komplexe Formen mit Hinterschnitten preisgünstig realisierbar. Unkritisch zu entformende Formteile können natürlich auch als Dauerform ausgebildet sein. Insbesondere die Kondensationskammer wird durch eine verlorene Form hergestellt. Mithin ist die Kondensationskammer ringsherum umgossen. Sie liegt damit innerhalb des Hauptbauteils. Um den Wärmeübertrager durch Gießen herstellen zu können, sollte die minimale räumliche Erstreckung innerhalb der Kammer wenigstens einem gießtechnisch bedingten Mindestkerndurchmesser entsprechen. Dieser beträgt besonders bevorzugt wenigstens acht Millimeter.

Bei einer homogenen Wandstärke der Kammerdecke wird diese im Betrieb gleichmäßig erwärmt, sodass auf dem Wärmeübertrager liegender Schnee gleichmäßig geschmolzen wird. Die notwendige und durch Erdwärme bereitzustellende Wärmeenergie kann so gering ausgelegt werden. Aufgrund des geringen Temperaturniveaus von Erdwärme entstehen auch nur geringe Wärmeabstrahlungsverluste. Dadurch wird mit wenig Wärmeenergie viel Schnee und Eis geschmolzen.

In einer Variante der Herstellung ist beim Gießen des Hauptbauteils ein Gießkern zur Ausbildung der Kondensationskammer durch die Anschlussöffnung gehaltert. Insbesondere wenn die Anschlussöffnung in der Gießlage oberhalb der Kondensationskammer gelegen ist, ergibt sich eine hängende Lagerung des Gießkerns, was je nach Durchmesser der Anschlussöffnung ausreichend sein kann.
Bei Dimensionierungen, bei denen der Gießkern nicht hinreichend stabil durch die Anschlussöffnung gehaltert werden kann, sieht eine Fortbildung der Erfindung vor, dass beabstandet zur Anschlussöffnung wenigstens ein weiteres Loch in die Kondensationskammer mündet, wobei jedes Loch jeweils von einem Verschlusselement verschlossen ist. Auch durch diese Löcher lässt sich der Gießkern während des Gießens des Hauptbauteils haltern. Zudem bietet ein solches Loch einen weiteren Zugang zur Kondensationskammer, um den Gießkern zerstörend zu entfernen, insbesondere zum Ausblasen/Ausspülen. Beispielsweise kann ein Fluid durch das Loch eingebracht werden, welches anschließend den zerstörten Gießkern aus einem anderen Loch oder der Anschlussöffnung ausspült. Weiterhin sind mechanische Werkzeuge durch diese Löcher einführbar, um den Gießkern zu zerkleinern. Vorzugsweise sind die Löcher rund, bzw. kreisförmig ausgebildet, sodass diese durch einfache Nacharbeiten verschließbar sind.
Um die Oberseite des Wärmeübertragers frei von Unebenheiten zu halten, bietet es sich an, wenigstens ein Loch durch den Kammerboden in die Kondensationskammer münden zu lassen und/oder wenigstens ein Loch durch eine Seitenwandung zwischen dem Kammerboden und der Kammerdecke in die Kondensationskammer münden zu lassen. Zu bevorzugen ist, dass der Durchmesser der Anschlussöffnung und/oder der Löcher kleiner ist als die flächige Erstreckung der Kammerdecke und/oder des Kammerbodens. Besonders bevorzugt ist er gar kleiner als der Abstand zwischen Kammerboden und Kammerdecke. Kleine Löcher lassen sich einfach und dicht verschließen und die Stabilität des Hauptbauteils bleibt erhalten.

Das Verschlusselement ist gemäß einer Variante der Erfindung ein Gewindestopfen oder eine Verschlusschraube. Um einen Gewindestopfen in einem Loch festlegen zu können, ist ein solches mit einem Innengewinde zu versehen, welches durch Nacharbeit einschneidbar ist. Weiterhin sollte um die Löcher eine Dichtfläche ausgebildet sein. Hierfür kann eine lokal spanende Nachbearbeitung erfolgen. Bei entsprechender Oberflächengüte sind keine zusätzlichen Dichtmittel notwendig. Alternativ könnten die Löcher jedoch auch zugeschweißt werden.

In einer Ausgestaltung der Erfindung ist der Abstand zwischen dem Kammerboden und der Kammerdecke kleiner als die flächige Erstreckung des Kammerbodens und/oder der Kammerdecke. Die so bewirkte horizontal flächige Erstreckung der Kondensationskammer erlaubt eine gleichmäßige Erwärmung einer großen Oberfläche oberhalb der Kammerdecke. Damit kann diese Oberfläche frei von Eis und Schnee gehalten werden. Insbesondere ist so ein Einsatz im Bereich eines Gleisbetts oder einer Weiche möglich, wobei der Wärmeübertrager sowohl auf einer Schwelle als auch in einem Schwellenzwischenraum positionierbar ist.

Um einen maximalen Wärmetransfer vom kondensierenden Wärmeträgermedium zum schmelzenden Eis- oder Schnee zu erreichen, sieht eine erfindungsgemäße Materialauswahl vor, dass das Hauptbauteil aus einem gut wärmeleitenden Material hergestellt ist. Bevorzugt ist das Hauptbauteil aus einem Metall. Besonders zu bevorzugen sind hierbei Ausbildungen mit Kupfer oder Aluminium. Durch den Zugverkehr statisch und dynamisch belastete Wärmeübertrager, insbesondere auch Gleitstühle, sollten jedoch aus Gusseisen gefertigt sein. Dieses ist besonders stabil.

Eine wichtige Weiterentwicklung der Erfindung sieht vor, dass der Kammerboden und die Kammerdecke über einen Zapfen miteinander verbunden sind. Die Verbindung über den Zapfen erlaubt auch die Verwendung eines unter hohem Druck stehenden Wärmeträgermediums innerhalb der Kondensationskammer. Ein Aufblähen des Wärmeübertragers durch hohen Innendruck wird durch die Aufnahme von Zugkräften durch den Zapfen vermieden. Zusätzlich erhöht der Zapfen die Steifigkeit des Wärmeübertragers bei einer äußeren Belastung, wie sie zum Beispiel bei einer Überfahrt eines Zuges auftritt. Das Wärmeträgermedium kann an dem Zapfen kondensieren und anschließend wird die Wärme von diesem auf die Kammerdecke übertragen. Mithin wird der zapfenbedingte Verlust an Kondensationsoberfläche an der Kammerdecke durch die neu geschaffene Kondensationsoberfläche am Zapfenumfang ausgeglichen.

Je nach zu beheizender Oberfläche, bzw. horizontaler Kammererstreckung, können unterschiedlich viele Zapfen vorgesehen werden. Bei einem Einsatz des Wärmeübertragers im Bereich von Weichen, insbesondere in einem Gleitstuhl ist meist ein einziger Zapfen hinreichend. Um die Zugkräfte der unter Druck stehenden Kondensationskammer bestmöglich aufnehmen zu können, sollten der Zapfen im Wesentlichen senkrecht zu der Kammerdecke und dem Kammerboden ausgerichtet sein. Kleine Gefälle zum Kondensatabfluss an Kammerdecke und Kammerboden sind jedoch zu berücksichtigen, sodass eine exakt senkrechte Ausrichtung nicht immer möglich ist.

Fertigungstechnisch günstig ist eine einteilige Ausbildung des Zapfens und des Hauptbauteils, insbesondere indem der Zapfen einteilig mit dem Hauptbauteil ausgebildet, insbesondere gegossen, ist. Bevorzugt ist dann ein Kehlradius am Übergang des Zapfens zur Kammerdecke und/oder zum Kammerboden ausgebildet, um an den Übergängen Materialbrüche durch Spannungsspitzen zu vermeiden. Bevorzugt weist der Zapfen aus diesem Grunde auch einen runden, insbesondere kreisförmigen, Querschnitt auf.

Weiterhin sieht eine Fortbildung der Erfindung vor, dass der Zapfen freistehend in der Kondensationskammer angeordnet ist. Eine Randlage des Zapfens würde zu einer ungleichen Stabilisierung der Kammerdecke und des Kammerbodens führen. Außerdem ist durch die freistehende Positionierung, die Entfernung des verlorenen Gießkerns einfach. Bei einem Spülen der Kondensationskammer kann der Spülstrom nämlich um den Zapfen herum geführt werden.

Um einen zügigen Abfluss von Kondensat zu erreichen, ist von einer Fortbildung der Erfindung vorgesehen, dass der Kammerboden in der Betriebslage in Richtung der Anschlussöffnung abfallend ausgebildet ist. Somit strömt Kondensat stets in Richtung des Gefälles zurück zur Anschlussöffnung. Das Gefälle ist bevorzugt in zwei Richtungen geneigt. Zum einen in Querrichtung in Richtung Außenseite des Gleitstuhls. Zum anderen in Längsrichtung in Richtung eines Schienenfußes. Am tiefsten Ort mündet dann die Anschlussöffnung in die Kondensationskammer.

Zur Erhöhung der Wärmeübertragung vom Wärmeträgermedium auf die Kammerdecke, betrifft eine Fortführung der Erfindung die Ausbildung einer strukturierten Oberfläche auf der Innenseite der Kammerdecke. Durch die eingebrachte Struktur vergrößert sich die Oberfläche.

Entsprechend steigt die Wärmeübertragung vom Wärmeträgermedium auf die Kammerdecke. Zudem kann der Abfluss des Kondensats von der Kammerdecke verbessert werden. Hierdurch ist die Schichtdicke des an der Kammerdecke anhaftenden Kondensats besonders gering und die Wärmeübertragung vom Wärmeträgermedium auf diese besonders hoch.

Eine spezielle Ausführung der strukturierten Kammerdecke betrifft ins Innere der Kondensationskammer weisende Rippen oder Abtropfspitzen. Sowohl die Rippen als auch die Abtropfspitzen sollten in der Betriebslage geodätisch nach unten ausgerichtet sein. Auf diese Weise unterstützen sie den Kondensatabfluss durch Abtropfen.

Ein beschleunigter Kondensatabfluss wird auch bei einer Ausbildung der Erfindung erreicht, bei welcher die Kammerdecke in der Betriebslage ein Gefälle in Richtung der Anschlussöffnung aufweist.

Weiterhin betrifft die Erfindung einen Gleitstuhl für eine Weiche mit einer Längserstreckung und einer Quererstreckung, welcher einteilig mit dem Hauptbauteil eines zuvor beschriebenen Wärmeübertragers ausgebildet ist. Mithin wird der Gleitstuhl unmittelbar ohne Wärmeübertragungsverluste erwärmt, sowie Schnee und Eis auf diesem geschmolzen. Dies ist besonders wichtig, da bereits dünne Schnee und Eisschichten von der Weichenzunge auf dem Gleitstuhl zusammengeschoben werden können und so die korrekte Endposition der Weichenzunge blockieren. Die Ausbildung des Hauptbauteils als Teil des Gleitstuhls ist auch besonders kostengünstig, da der Gleitstuhl ohnehin gefertigt werden muss und das Hauptbauteil des Wärmeübertragers kein zusätzliches Bauteil ist.

Von einer Fortentwicklung des erfindungsgemäßen Gleitstuhls ist vorgesehen, dass dieser einteilig mit einem Hauptbauteil eines zweiten Wärmeübertragers wie zuvor beschriebenen ausgebildet ist. Demgemäß ist der Gleitstuhl einteilig mit zwei Hauptbauteilen zweier Wärmeübertrager ausgebildet und es sind zwei Kondensationskammern vorgesehen. Die Kondensationskammern können baugleich und/oder spiegelverkehrt ausgebildet sein. Hierdurch ist es möglich, eine größere Oberfläche zu beheizen. Weiterhin kann auch bei einer geringen Bauhöhe des Wärmeübertragers ein hinreichend großes Gefälle an der Innenseite des Kammerbodens bereitgestellt werden. Entsprechend fließt das Kondensat sicher zurück zur Anschlussöffnung.

Bei einer speziellen Weiterentwicklung des Gleitstuhls, sind die Kondensationskammern in Querrichtung benachbart zueinander angeordnet. Damit kann der Gleitstuhl besonders gut über die gesamte Breite einer Gleisschwelle erwärmt werden.

In einer vorteilhaften Anordnung sind die beiden Kondensationskammern dachförmig zueinander angeordnet. Damit ist es möglich die tief gelegenen Anschlussöffnungen am Rande oder seitlich der Gleisschwellen zu positionieren. Entsprechend einfach können die Anschlussleitungen an der Gleisschwelle vorbeigeführt werden.

Der erfindungsgemäße Gleitstuhl kann dadurch ergänzt sein, dass eine Schienenfußaufnahme zur Aufnahme eines quer verlaufenden Schienenfußes in Längsrichtung benachbart zur Kondensationskammer angeordnet ist. Die Schienenfußaufnahme sollte eine Negativform eines Abschnitts eines Schienenfußes aufweisen. Damit ist der Gleitstuhl relativ zur Schiene fixiert und stets korrekt positioniert. Durch die Nähe zu den Kondensationskammern, wird die Oberfläche bis an die Schiene heran erwärmt und von Schnee freigehalten. Gleichzeitig eignet sich die Schienenfußaufnahme als Wärmeübertragungsfläche, sodass die Schiene und der Gleitstuhl thermisch gekoppelt sind. Mithin ist die Schiene selbst erwärmbar. Zur Verbesserung des Wärmeflusses kann zusätzlich eine Warmleitpaste in der Kontaktzone vorgesehen sein.

In einer speziellen Variante des erfindungsgemäßen Gleitstuhls ist jede Anschlussöffnung in Querrichtung außenseitig gelegen sowie in Längsrichtung im Wesentlichen in Richtung der Schienenfußaufnahme und/oder an dieser vorbei zielend, bevorzugt um weniger als 45 Grad, ausgerichtet. Jede Anschlussöffnung bezieht sich hierbei nur auf die eingeführten Anschlussöffnungen der einen oder der zwei Kondensationskammern, nicht jedoch auf jede erdenklich mögliche weitere Anschlussöffnung. Damit kann eine Anschlussleitung unmittelbar unter der Schiene hindurchgeführt werden und der Raum zwischen den Schwellen bleibt für Schotterverdichtungseinrichtungen frei zugänglich.

Vorteilhafterweise werden die Anschlussöffnungen unterhalb eines abdeckenden Blechs oder eines Vorsprungs des Hauptbauteils und/oder einem Fortsatz der Kammerdecke angeordnet. Hierdurch sind die Anschlüsse vor mechanischen Einflüssen von oben geschützt.

Ferner ist eine Ausführungsform des Gleitstuhls günstig, bei der oberhalb einer jeden Kondensationskammer eine Gleitfläche für eine in Längsrichtung zu schwenkende Weichenzunge ausgebildet ist. Die Kondensation des Wärmeträgermediums erfolgt somit direkt unterhalb der Gleitfläche und deren Erwärmung ist sehr direkt. Wärmeverluste sind hierdurch gering und es kann viel Schnee und Eis geschmolzen werden.

Bevorzugt ist die Erfindung dadurch ergänzt, dass der Gleitstuhl eine Unterseite aufweist, an welcher eine thermische Isolierung angeordnet ist, wobei die Unterseite in der Betriebslage geodätisch nach unten weist. Ein Wärmeabfluss nach unten wird so vermieden und ein Maximum an die bestimmungsgemäße Kammerdecke und Oberseite des Gleitstuhls geleitet, indem am Kammerboden aufgenommene Wärme über die Seitenwandungen und/oder den Zapfen zur Kammerdecke geleitet wird. Die unterseitige Auflagefläche des Gleitstuhls ist vorzugsweise auszusparen, da hier eine feste Verbindung vorliegen sollte. Als Isolierung kommen insbesondere Schäume in Frage. Zum Schutz vor Nagern und Kleintieren kann die thermische Isolierung mit einer Abdeckplatte, zum Beispiel aus Kunststoff versehen sein.

Die Erfindung betrifft außerdem eine Weichenheizeinrichtung mit wenigstens einem Wärmeübertrager oder einem Gleitstuhl wie sie zuvor beschrieben sind, wobei die Anschlussöffnung hydraulisch mit einem Erdwärmerohr verbunden ist. Eine Weichenheizeinrichtung dieser Bauart ist geeignet, mit geringem Einsatz von Wärmeenergie viel Schnee und Eis zu schmelzen. Zudem sind der Wärmeübertrager und damit auch die Weichenheizeinrichtung kostengünstig in großen Stückzahlen fertigbar. Sofern ein Zapfen vorgesehen ist, kann eine große Oberfläche mit einer einzigen Kondensationskammer beheizt werden, in welcher ein Wärmeträgermedium unter hohem Betriebsdruck steht. Durch Erwärmung des Wärmeträgermediums im Verdampferbereich des Erdwärmerohrs wird dieses verdampft. Anschließend steigt es über einen Transportbereich bis in die Kondensationskammer. Bei geringer Temperatur der Kammerwandungen kondensiert das Wärmeträgermedium anschließend. Hierbei gibt es Wärme an den Wärmeübertrager ab. Das Temperaturniveau des Wärmeübertragers ist dabei ausreichend hoch, um Schnee und Eis schmelzen zu können, nicht jedoch so hoch, dass eine große Abstrahlungswärme entsteht. Somit wird ein Großteil der aus dem Erdreich nach oben geleiteten Wärme zum Schmelzen von Eis und Schnee eingesetzt.

Ein weiterer Vorteil der erfindungsgemäßen Weichenheizeinrichtung liegt darin, dass die Zirkulation des Wärmeträgermediums selbstständig ablaufen kann. Um den Rückfluss von Kondensat aus dem Wärmeübertrager zurück zum Erdwärmerohr zu ermöglichen, sollte in der Einbausituation an einer Weiche allerdings ein durchgehendes Gefälle vom Kammerboden bis zum Erdwärmerohr ausgebildet sein. Mithin ist keine energetisch betriebene Pumpe notwendig.

Vielmehr führt die Temperaturdifferenz zwischen der Umgebung des Verdampferbereichs und des Wärmeübertragers zu Konvektionsströmen und Phasenwechseln des Wärmeträgermediums. Vorteilhaft ist auch, dass eine Zirkulation des Wärmeträgermediums außerdem nur dann einsetzt wird, wenn die Temperatur des Wärmeübertragers geringer ist als die Erdwärmetemperatur. Nur in diesem Falle ist der Wärmeübertrager als Kondensator aktiv und nur dann wird der Erde Wärme entzogen und an die Umgebung abgegeben.

Zur Inbetriebnahme sollte der Kondensationsraum mit einem Wärmeträgermedium gefüllt sein. Als besonders praxistauglich aufgrund der geforderten Temperaturen und der geforderten Umweltverträglichkeit hat sich als Wärmeträgermedium Kohlendioxid (CO₂) erwiesen. Um einen Phasenwechsel innerhalb der Weichenheizeinrichtung des Wärmeträgermediums zu erreichen, insbesondere bei der Verwendung von Kohlendioxid, ist vorzugsweise ein Betriebsdruck von 45 bar bei einer Temperatur von 20 Grad Celsius einzuhalten. Der Betriebsdruck kann sich allerdings in Abhängigkeit der Temperatur des Wärmeübertragers und der Temperatur des Erdreiches verändern.

Durch das Einbringen des Wärmeträgermediums in flüssiger Phase in das Erdwärmerohr ist letzteres geodätisch von unten nach oben in einen unten angeordneten Sammelbereich, einen sich geodätisch darüber anschließenden Verdampferbereich, sowie einen geodätisch darüber anschließenden Transportabschnitt einteilbar. Die geodätischen Höhen der Grenzen zwischen dem Sammelbereich, dem Verdampferbereich und dem Transportbereich sind dabei abhängig von den Umgebungstemperaturen und damit verbunden den anteiligen Aggregatzuständen des Wärmeträgermediums. Zur Vermeidung von Wärmeverlusten sollte wenigstens ein Teilabschnitt des Transportabschnitts eine thermische Isolierung aufweisen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Gleitstuhl in einer Draufsicht, der zwei Wärmeübertrager aufweist, deren Position durch gestrichelte Linien gekennzeichnet ist;
- Fig. 2: einen Gleitstuhl aus seitlicher Perspektive;
- Fig. 3: einen Horizontalschnitt durch einen Wärmeübertrager;
- Fig. 4: einen Querschnitt durch einen Gleitstuhl mit zwei Wärmeübertragern; und
- Fig. 5: einen Einbau einer Weichenheizeinrichtung an einer Weiche, umfassend einen Gleitstuhl mit zwei Wärmeübertragern.

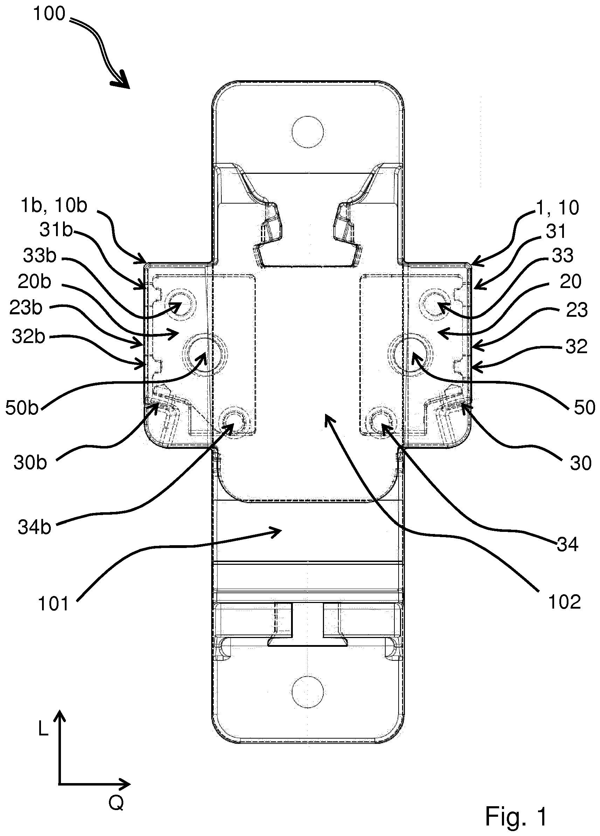

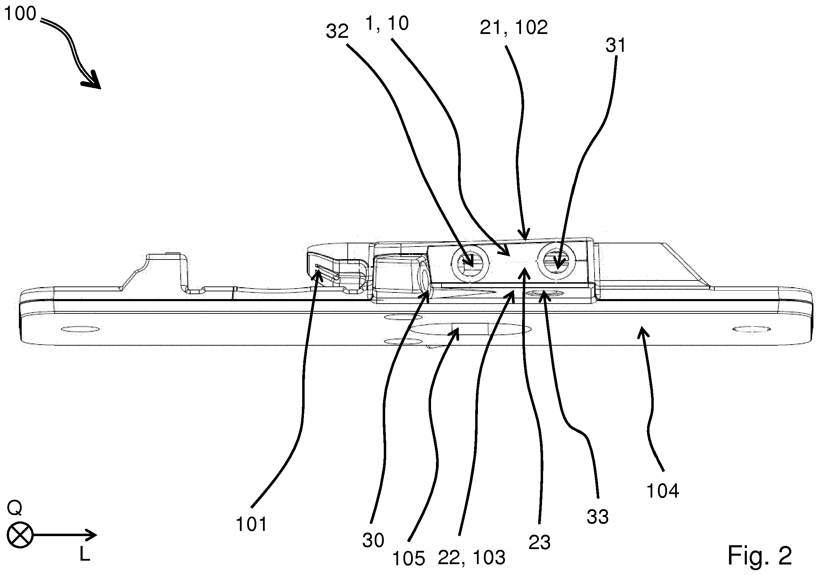

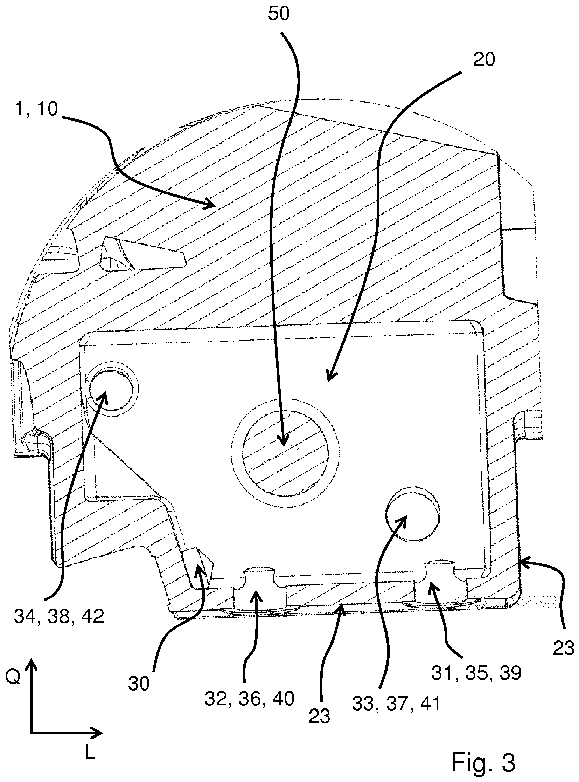

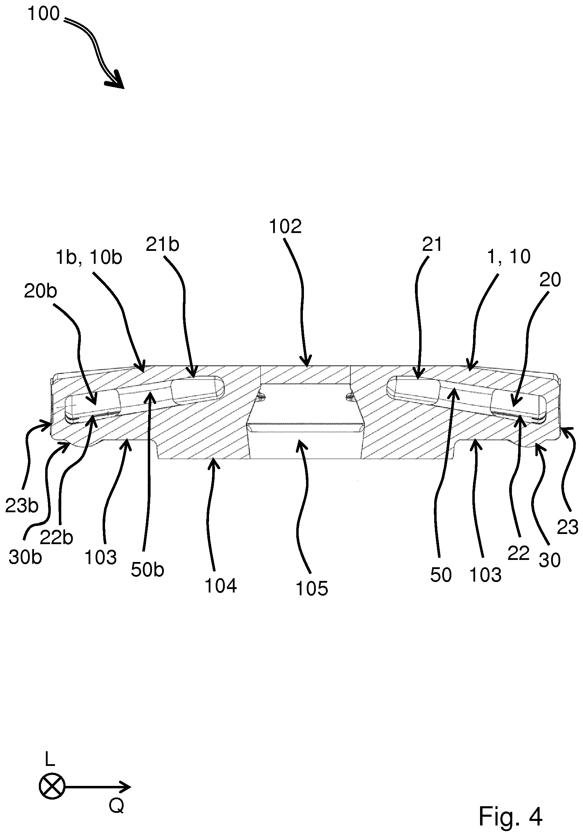

**Fig. 1** zeigt eine Ansicht eines Gleitstuhls 100 aus der Draufsicht, wobei dieser zwei Wärmeübertrager 1, 1b aufweist, deren innerhalb des Gleitstuhls 100 liegende Position durch gestrichelte Linien gekennzeichnet ist. In **Fig. 2** ist eine seitliche Ansicht eines Gleitstuhls 100 dargestellt. **Fig. 3** ist weiterhin ein Horizontalschnitt durch einen Wärmeübertrager 1 zu entnehmen, wie er in den Gleitstühlen 100 nach den **Fig. 1** **und** **2** integriert ist, der jedoch auch separat von einem Gleitstuhl 100 ausgebildet sein kann. Zudem findet man in **Fig. 4** einen Querschnitt durch einen Gleitstuhl 100 mit zwei Wärmeübertragern 1, 1b.

Der Gleitstuhl 100 für eine Weiche nach den **Fig. 1****,** **2** **und** **4** hat eine Längserstreckung L und einer Quererstreckung Q. Man erkennt in den Fig. 1 und 4, dass der Gleitstuhl 100 einteilig mit zwei Hauptbauteilen 10, 10b zweier Wärmeübertrager 1, 1b ausgebildet ist. Jeder Wärmeübertrager 1, 1b hat jeweils eine Kondensationskammer 20, 20b, welche wie in den Fig. 2 und 4 erkennbar ist, eine Kammerdecke 21, 21b und einen Kammerboden 22, 22b aufweist. Weiterhin ist jede Kondensationskammer 20, 20b der Fig. 1 bis 4 innenliegend, sowie ringsherum umgossen innerhalb eines einteilig gefertigten, gusseisernen Hauptbauteils 10, 10b angeordnet. Letztere wiederum sind gemäß der Fig. 1, 2 und 4 einteilig mit dem Gleitstuhl 100 gefertigt und damit Teil von diesem. Alternativ kann ein baugleicher Gleitstuhl 100 auch durch Sintern hergestellt werden.

Wie aus **Fig. 4** hervorgeht, ist der Abstand zwischen dem Kammerboden 22, 22b und der Kammerdecke 21, 21b kleiner als die flächige horizontale Erstreckung des Kammerbodens 22 und der Kammerdecke 21. Daher ist in den Zentren der Kondensationskammern 20, 20b jeweils ein Zapfen 50, 50b vorgesehen, der eine Verbindung zwischen dem Kammerboden 22, 22b und der Kammerdecke 21, 21b erzeugt. Die Zapfen 50, 50b sind jeweils freistehend und im Wesentlichen mittig in der jeweiligen Kondensationskammer 20, 20b angeordnet und haben einen runden, insbesondere kreisförmigen Querschnitt (vgl. hierzu auch Fig. 1 und 3). Außerdem sind die Zapfen 50, 50b einteilig mit den Hauptbauteilen 10, 10b und damit dem Gleitstuhl 100 gegossen.

In Fig. 1 erkennt man, dass in jede Kondensationskammer 20, 20b eine Anschlussöffnung 30, 30b mündet, um mit einem Erdwärmerohr verbunden werden zu können. Diese sind rund, insbesondere abschnittsweise kreiszylindrisch, und haben ein Innengewinde. In der Betriebslage des Wärmeübertragers 1, 1b ist der Kammerboden 22, 22b in Richtung der Anschlussöffnung 3, 30b abfallend ausgebildet (vgl. hierzu auch Fig. 2).

Weiterhin erkennt man in den Fig. 1 und 4, dass die Kondensationskammern 20, 20b in Querrichtung Q benachbart zueinander angeordnet sind, insbesondere dachförmig (vgl. Fig. 4). Oberhalb der Kondensationskammern 20, 20b findet sich eine Gleitfläche 102 für eine in Längsrichtung L zu schwenkende Weichenzunge 112, die in den Fig. 1, 2 und 4 gekennzeichnet ist. Insbesondere in den Fig. 2 und 4 sieht man eine Unterseite 103 des Gleitstuhls 100, an welcher eine thermische Isolierung anordenbar ist. Die Unterseite 103 weist in der Betriebslage geodätisch nach unten. Im Zentrum des Gleitstuhls 100 ist zudem eine ebene Aufstandsfläche 104 erkennbar. Mittig zwischen den Kondensationskammern 20, 20b ist eine unterseitig geöffnete Senke 105 angeordnet. Diese vermeidet eine zu große Materialstärke in diesem Bereich und verbessert die Wärmeleitung nach oben zur Gleitfläche 102.

Gemäß den Fig. 1 und 2 ist zu den beiden Kondensationskammern 20, 20b in Längsrichtung L benachbart eine Schienenfußaufnahme 101 zur Aufnahme eines quer verlaufenden Schienenfußes ausgebildet, insbesondere einteilig als Bestandteil des Gleitstuhls 100. Die Gleitfläche 102 führt bis an die Schienenfußaufnahme 101 heran, sodass eine Weichenzunge bis an den Schienensteg heran geschwenkt werden kann und gleichzeitig von unten gestützt ist.

Die Anschlussöffnungen 30, 30b sind gemäß Fig. 1 in Querrichtung Q des Gleitstuhls 100 außenseitig gelegen. Außerdem sind sie in Längsrichtung L im Wesentlichen in Richtung der Schienenfußaufnahme 101 bzw. an dieser vorbei zielend ausgerichtet. Mithin hat ein Kammerboden 22, 22b gemäß Fig. 4 aufgrund der dachförmigen Anordnung ein quer gerichtetes Gefälle in Richtung Außenseite des Gleitstuhls 100 sowie ein längs gerichtetes Gefälle in Richtung der Schienenfußaufnahme 101.

Beim Gießen des Gleitstuhls 100 mit den zwei Hauptbauteilen 10, 10b wie in den Fig. 1 und 4 wird jeweils ein Gießkern zur Ausbildung der Kondensationskammern 20, 20b durch die zugehörige Anschlussöffnung 30 gehaltert. Wie man in Fig. 1 erkennt, ist das Größenverhältnis der Kondensationskammer 20, 20b zur zugehörigen Anschlussöffnung 30, 30b groß. Daher münden jeweils beabstandet zur Anschlussöffnung 30, 30b weitere vier Löcher 31, 31b, 32, 32b, 33, 33b, 34, 34b in die Kondensationskammern 20, 20b. Je zwei der Löcher 31, 31b, 32, 32b münden durch eine Seitenwandung 23 zwischen dem Kammerboden 22, 22b und der Kammerdecke 21, 21b in die Kondensationskammer 20, 20b und je zwei Löcher 33, 33b, 34, 34b durch den Kammerboden 22, 22b (vgl. auch Fig. 2 und 3).

Während des Gießens des Gleitstuhls 100 nebst der Hauptbauteile 10, 10b werden die Gießkerne zur Ausbildung der Kondensationskammern 20, 20b auch durch die Löcher 31, 31b, 32, 32b, 33, 33b, 34, 34b gehaltert. Anschließend werden die Kerne durch die Löcher 31, 31b, 32, 32b, 33, 33b, 34, 34b und/oder die Anschlussöffnungen 30, 30b entfernt. Hierfür handelt es sich bei den Gießkernen um verlorene Formen. Später wird jedes dieser Löcher 31, 31b, 32, 32b, 33, 33b, 34, 34b mit jeweils einem Verschlusselement 35, 36, 37, 38 wie sie in Fig. 3 gezeigt sind verschlossen. Die von den Fig. 1 bis 3 gezeigten Löcher 31, 31b, 32, 32b, 33, 33b, 34, 34b sind hierfür rund ausgeführt, insbesondere sind sie abschnittsweise kreiszylindrisch, und haben je ein Innengewinde. Die Innengewinde nebst einer radial einfassenden Dichtfläche werden durch Nachbearbeitung des Gussteils ausgebildet. Gemäß **Fig. 3** sind die Verschlusselemente 35, 36, 37, 38 Gewindestopfen 39, 40, 41, 42.

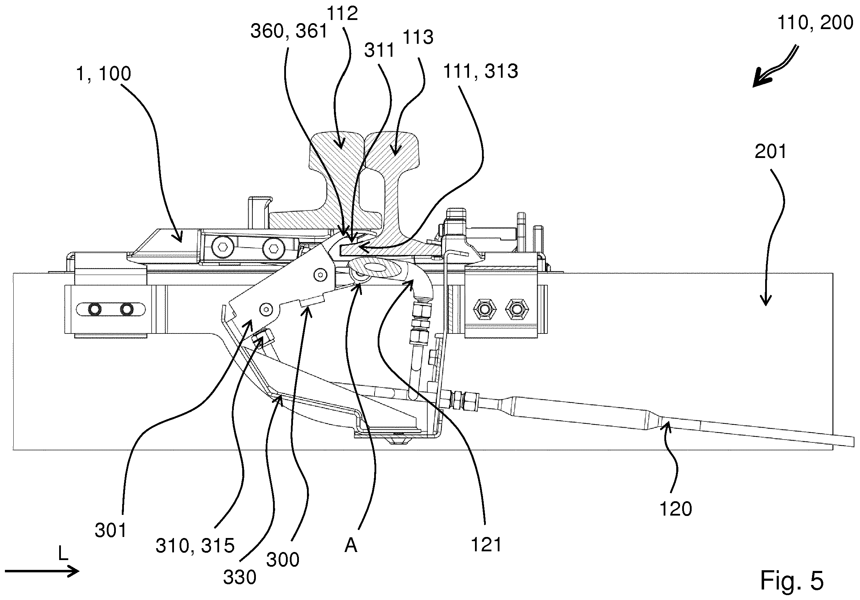

In **Fig. 5** ist eine Weichenheizeinrichtung 200 in einer möglichen Einbaulage an einer Weiche 110 dargestellt. Die Weichenheizeinrichtung 200 weist einen Wärmeübertrager 1 auf, der in einem Gleitstuhl 100 integriert ist. Dabei kann e sich um einen Gleitstuhl 100 gemäß der Figuren 1, 2 und 4 handeln. Der Gleitstuhl 100 liegt auf einer Gleisschwelle 201 auf. Über den Gleitstuhl 100 hinweg verlaufen ein Schienensteg 113 und eine Weichenzunge 112, wobei letztere in der Horizontalen schwenkbar gleitend auf dem Gleitstuhl 100 gelagert ist.

Im Vordergrund vor der Gleisschwelle 201 ist noch eine zusätzliche Wärmeübertragervorrichtung 300 mit einem Schwellenfach-Wärmeübertrager 301 angeordnet. Ein Profilelement 311 von der Wärmeübertragervorrichtung 300 ist mit seiner Schienenfußaufnahme 313 auf den Schienenfuß 111 des Schienenstegs 113 aufgesteckt. Eine Drehachse A des Profilelements 311 ist benachbart und im Wesentlichen parallel zum Schienensteg 113 ausgerichtet. Sie liegt insbesondere unterhalb des Schienenfußes 111. Um diese Drehachse A ist der Schwellenfach-Wärmeübertrager 301 drehbar gelagert. Eine Oberwandung 361 einer Koppelöffnung 360 des Schwellenfach-Wärmeübertragers 301 übergreift den Schienenfuß 111 oberseitig und ist in der gezeigten Drehstellung bis an den vertikalen Abschnitt des Schienenstegs 113 herangeführt. Außenseitig ist ein Abstand zwischen der Oberwandung 361 und der Weichenzunge 112 erkennbar, welche sich in einer geschlossenen Position präsentiert, in der sie am Schienensteg 113 anliegt.

Die Anschlussöffnung 310 des Schwellenfach-Wärmeübertragers 301 ist über einen Anschluss 315 hydraulisch mit einem Erdwärmerohr 120 verbunden. Ein zweiter Anschluss 121 des Erdwärmerohrs 120 führt zur Kondensationskammer im Gleitstuhl 100. Dieser zweite Anschluss 121 führt unmittelbar unter dem Schienensteg 113 hindurch und ist in einem Freiraum unterhalb des Schwellenfach-Wärmeübertragers 301 vor dem Schotterbett geschützt. Der Freiraum wird bodenseitig von einem Schutzblech 330 begrenzt.

Der erfindungsgemäße Gleitstuhl 100 ist selbstverständlich auch ohne die gezeigte Ergänzung um eine Wärmeübertragervorrichtung 300 im Schwellenfach einsetzbar.

**Bezugszeichenliste**

| | | | |
|---|---|---|---|
| 1 | Wärmeübertrager | 42 | vierter Gewindestopfen |
| 1b | zweiter Wärmeübertrager | | |
| | | 50 | Zapfen |
| 10 | Hauptbauteil | 50b | Zapfen |
| 10b | zweites Hauptbauteil | | |
| | | 100 | Gleitstuhl |
| 20 | Kondensationskammer | 101 | Schienenfußaufnahme |
| 20b | zweite Kondensationskammer | 102 | Gleitfläche |
| 21 | Kammerdecke | 103 | Unterseite |
| 21b | Kammerdecke | 104 | Auflagefläche |
| 22 | Kammerboden | 105 | Senke |
| 22b | Kammerboden | | |
| 23 | Seitenwandung | 110 | Weiche |
| 23b | Seitenwandung | 111 | Schienenfuß |
| | | 112 | Weichenzunge |
| 30 | Anschlussöffnung | 113 | Schienensteg |
| 30b | zweite Anschlussöffnung | | |
| 31 | erstes Loch | 120 | Erdwärmerohr |
| 31b | erstes Loch | 121 | Anschluss |
| 32 | zweites Loch | | |
| 32b | zweites Loch | 200 | Weichenheizeinrichtung |
| 33 | drittes Loch | 201 | Gleisschwelle |
| 33b | drittes Loch | 204 | Schienensteg |
| 34 | viertes Loch | 205 | Weichenzunge |
| 34b | viertes Loch | | |
| 35 | erstes Verschlusselement | 300 | Wärmeübertragervorrichtung |
| 36 | zweites Verschlusselement | 301 | Schwellenfach-Wärmeübertrager |
| 37 | drittes Verschlusselement | 310 | Anschlussöffnung |
| 38 | viertes Verschlusselement | 311 | Profilelement |
| 39 | erster Gewindestopfen | 313 | Schienenfußaufnahme |
| 40 | zweiter Gewindestopfen | 315 | Anschluss |
| 41 | dritter Gewindestopfen | 330 | Schutzblech |
| 360 | Koppelöffnung | A | Drehachse |
| 361 | Oberwandung | L | Längserstreckung |
| | | Q | Quererstreckung |

## Patentansprüche

1. **Wärmeübertrager** (1, 1b) für Weichen (110), mit einer Kondensationskammer (20, 20b), die eine Kammerdecke (21, 21b) und einen Kammerboden (22, 22b) aufweist, und in welche eine Anschlussöffnung (30, 30b) zur Verbindung mit einem Erdwärmerohr (120) mündet, wobei die Kondensationskammer (20, 20b) innenliegend in einem einteilig gefertigten Hauptbauteil (10, 10b) angeordnet ist, **dadurch gekennzeichnet, dass** das Hauptbauteil (10, 10b) ein Gießteil oder ein Sinterteil ist, wobei die Kondensationskammer (20, 20b) ringsherum umgossen ist.

2. Wärmeübertrager (1, 1b) nach Anspruch 1, **dadurch gekennzeichnet, dass** beabstandet zur Anschlussöffnung (30, 30b) wenigstens ein weiteres Loch (31, 31b, 32, 32b, 33, 33b, 34, 34b) in die Kondensationskammer (20, 20b) mündet, wobei jedes Loch (31, 31b, 32, 32b, 33, 33b, 34, 34b) jeweils von einem Verschlusselement (35, 36, 37, 38) verschlossen ist.

3. Wärmeübertrager (1, 1b) nach einem der vorhergehenden Ansprüche 1 oder 2, **dadurch gekennzeichnet, dass** der Abstand zwischen dem Kammerboden (22, 22b) und der Kammerdecke (21, 21b) kleiner ist als die flächige Erstreckung des Kammerbodens (22, 22b) und/oder der Kammerdecke (21, 21b).

4. Wärmeübertrager (1, 1b) nach einem der vorhergehenden Ansprüche, **dadurch gekennzeichnet, dass** der Kammerboden (22, 22b) und die Kammerdecke (21, 21b) über einen Zapfen (50, 50b) miteinander verbunden sind.

5. Wärmeübertrager (1, 1b) nach Anspruch 4, **dadurch gekennzeichnet, dass** der Zapfen (50, 50b) freistehend in der Kondensationskammer (20) angeordnet ist.

6. Wärmeübertrager (1, 1b) nach einem der Ansprüche 4 oder 5, **dadurch gekennzeichnet, dass** der Zapfen (50, 50b) einteilig mit dem Hauptbauteil (10, 10b) ausgebildet ist.

7. Wärmeübertrager (1, 1b) nach einem der vorhergehenden Ansprüche, **dadurch gekennzeichnet, dass** der Kammerboden (22, 22b) in der Betriebslage in Richtung der Anschlussöffnung (30, 30b) abfallend ausgebildet ist.

8. **Gleitstuhl** (100) für eine Weiche (110) mit einer Längserstreckung (L) und einer Quererstreckung (Q), umfassend einen Wärmeübertrager (1) nach einem der vorhergehenden Ansprüche, wobei der Gleitstuhl (100) einteilig mit dem Hauptbauteil (10) des Wärmeübertragers (1) ausgebildet ist.

9. Gleitstuhl (100) nach Anspruch 8, **dadurch gekennzeichnet, dass** dieser einteilig mit einem Hauptbauteil (10b) eines zweiten Wärmeübertragers (1b) nach einem der Ansprüche 1 bis 7 ausgebildet ist.

10. Gleitstuhl (100) nach Anspruch 9, **dadurch gekennzeichnet, dass** die Kondensationskammern (20, 20b) in Querrichtung (Q) benachbart zueinander angeordnet sind.

11. Gleitstuhl (100) nach einem der Ansprüche 8 bis 10, **dadurch gekennzeichnet, dass** eine Schienenfußaufnahme (101) zur Aufnahme eines quer verlaufenden Schienenfußes (111) in Längsrichtung (L) benachbart zur Kondensationskammer (20) angeordnet ist.

12. Gleitstuhl (100) nach einem der Ansprüche 8 bis 11, **dadurch gekennzeichnet, dass** jede Anschlussöffnung (30, 30b) in Querrichtung (Q) außenseitig gelegen sowie in Längsrichtung (L) im Wesentlichen in Richtung der Schienenfußaufnahme (101) und/oder an dieser vorbei zielend ausgerichtet ist.

13. Gleitstuhl (100) nach einem der Ansprüche 8 bis 12, **dadurch gekennzeichnet, dass** oberhalb einer jeden Kondensationskammer (20, 20b) eine Gleitfläche (102) für eine in Längsrichtung (L) zu verschwenkende Weichenzunge (112) ausgebildet ist.

14. Gleitstuhl (100) nach einem der Ansprüche 8 bis 13, **dadurch gekennzeichnet, dass** dieser eine Unterseite (103) aufweist, an welcher eine thermische Isolierung angeordnet ist, wobei die Unterseite (103) in der Betriebslage geodätisch nach unten weist.

15. **Weichenheizeinrichtung** (200) mit wenigstens einem Wärmeübertrager (1, 1b) nach einem der Ansprüche 1 bis 7 oder einem Gleitstuhl (100) nach einem der Ansprüche 8 bis 14, wobei die Anschlussöffnung (10) hydraulisch mit einem Erdwärmerohr (120) verbunden ist.

## Claims

1. **Heat exchanger** (1, 1b) for switches (110), with a condensation chamber (20, 20b) comprising a chamber ceiling (21, 21b) and a chamber base (22, 22b), a connecting opening (30, 30b) for connection to a geothermal heat pipe (120) leading into said condensation chamber, wherein the condensation chamber (20, 20b) is arranged on the inside in a one-piece main component (10, 10b), **characterised in that** the main component (10, 10b) is a cast component or a sintered component, wherein the condensation chamber (20, 20b) is recast all around.

2. Heat exchanger (1, 1b) according to claim 1, **characterised in that** spaced apart from the connecting opening (30, 30b), at least one further opening (31, 31b, 32, 32b, 33, 33b, 34, 34b) leads into the condensation chamber (20, 20b), wherein each opening (31, 31b, 32, 32b, 33, 33b, 34, 34b) is closed by a closing element (35, 36, 37, 38).

3. Heat exchanger (1, 1b) according to any of the preceding claims 1 or 2, **characterised in that** the distance between the chamber base (22, 22b) and the chamber ceiling (21, 21b) is smaller than the surface extension of the chamber base (22, 22b) and/or the chamber ceiling (21, 21b).

4. Heat exchanger (1, 1b) according to any of the preceding claims, **characterised in that** the chamber base (22, 22b) and the chamber ceiling (21, 21b) are connected by a pin (50, 50b).

5. Heat exchanger (1, 1b) according to claim 4, **characterised in that** the pin (50, 50b) is arranged freestanding in the condensation chamber (20).

6. Heat exchanger (1, 1b) according to any of claims 4 or 5, **characterised in that** the pin (50, 50b) is integrally formed with the main component (10, 10b).

7. Heat exchanger (1, 1b) according to any of the preceding claims, **characterised in that** the chamber base (22, 22b) is sloped in the direction of the connecting opening (30, 30b) in the operating state.

8. **Slide chair** (100) for a switch (110), with a longitudinal extension (L) and a transverse extension (Q), comprising a heat exchanger (1) according to any of the preceding claims, wherein the slide chair (100) is integrally formed with the main component (10) of the heat exchanger (1).

9. Slide chair (100) according to claim 8, **characterised in that** the slide chair is integrally formed with a main component (10b) of a second heat exchanger (1b) according to any of claims 1 to 7.

10. Slide chair (100) according to claim 9, **characterised in that** the condensation chambers (20, 20b) are arranged adjacent to each other in the transverse direction (Q).

11. Slide chair (100) according to any of claims 8 to 10, **characterised in that** a rail base receiver (101) for receiving a transversely extending rail base (111) is arranged adjacent to the condensation chamber (20) in the longitudinal direction (L).

12. Slide chair (100) according to any of claims 8 to 11, **characterised in that** each connecting opening (30, 30b) is arranged on the outside in the transverse direction (Q), and in the longitudinal direction (L) is essentially oriented in the direction of the rail base receiver (101) and/or is directed past the rail base receiver.

13. Slide chair (100) according to any of claims 8 to 12, **characterised in that** a sliding surface (102) is formed above each condensation chamber (20, 20b) for a switch tongue (112) which is pivotable in the longitudinal direction (L).

14. Slide chair (100) according to any of claims 8 to 13, **characterised in that** the slide chair has an underside (103) on which a thermal insulation is arranged, wherein the underside (103) is geodetically directed downwards in the operating state.

15. **Switch heating device** (200) with at least one heat exchanger (1, 1b) according to any of claims 1 to 7 or a slide chair (100) according to any of claims 8 to 14, wherein the connecting opening (10) is hydraulically connected to a geothermal heat pipe (120).

## Revendications

1. **Échangeur de chaleur** (1, 1b) pour aiguilles (110), avec une chambre de condensation (20, 20b), qui comporte un toit de chambre (21, 21b) et un fond de chambre (22, 22b) et dans laquelle débouche un orifice de raccordement (30, 30b) pour la liaison avec un tube de chaleur géothermique (120),
dans lequel la chambre de condensation (20, 20b) est agencée à l'intérieur dans un élément principal (10, 10b) fabriqué d'une seule pièce,
**caractérisé en ce que** l'élément principal (10, 10b) est une pièce moulée ou une pièce frittée, la chambre de condensation (20, 20b) étant complètement entourée par la coulée.

2. Échangeur de chaleur (1, 1b) selon la revendication 1, **caractérisé en ce que,** à une certaine distance de l'orifice de raccordement (30, 30b), au moins un autre trou (31, 31b, 32, 32b, 33, 33b, 34, 34b) débouche dans la chambre de condensation (20, 20b), chaque trou (31, 31b, 32, 32b, 33, 33b, 34, 34b) étant fermé à chaque fois par un élément d'obturation (35, 36, 37, 38).

3. Échangeur de chaleur (1, 1b) selon l'une des revendications précédentes 1 ou 2, **caractérisé en ce que** la distance entre le fond de chambre (22, 22b) et le toit de chambre (21, 21b) est inférieure à l'extension en surface du fond de chambre (22, 22b) et/ou du toit de chambre (21, 21b).

4. Échangeur de chaleur (1, 1b) selon l'une des revendications précédentes, **caractérisé en ce que** le fond de chambre (22, 22b) et le toit de chambre (21, 21b) sont assemblés l'un à l'autre par l'intermédiaire d'un tourillon (50, 50b).

5. Échangeur de chaleur (1, 1b) selon la revendication 4, **caractérisé en ce que** le tourillon (50, 50b) est agencé isolément dans la chambre de condensation (20).

6. Échangeur de chaleur (1, 1b) selon l'une des revendications 4 ou 5, **caractérisé en ce que** le tourillon (50, 50b) est conçu d'une seule pièce avec l'élément principal (10, 10b).

7. Échangeur de chaleur (1, 1b) selon l'une des revendications précédentes, **caractérisé en ce que,** en position de fonctionnement, le fond de chambre (22, 22b) est conçu incliné en direction de l'orifice de raccordement (30, 30b).

8. **Coussinet de glissement** (100) pour une aiguille (110) avec une dimension longitudinale (L) et une dimension transversale (Q), comprenant un échangeur de chaleur (1) selon l'une des revendications précédentes, lequel coussinet de glissement (100) est conçu d'une seule pièce avec l'élément principal (10) de l'échangeur de chaleur (1).

9. Coussinet de glissement (100) selon la revendication 8, **caractérisé en ce que** celui-ci est conçu d'une seule pièce avec un élément principal (10b) d'un deuxième échangeur de chaleur (1b) selon l'une des revendications 1 à 7.

10. Coussinet de glissement (100) selon la revendication 9, **caractérisé en ce que** les chambres de condensation (20, 20b) sont agencées au voisinage les unes des autres dans la direction transversale (Q).

11. Coussinet de glissement (100) selon l'une des revendications 8 à 10, **caractérisé en ce qu'un** logement de patin de rail (101) destiné à loger un patin de rail (111) s'étendant transversalement est agencé au voisinage de la chambre de condensation (20) dans la direction longitudinale (L).

12. Coussinet de glissement (100) selon l'une des revendications 8 à 11, **caractérisé en ce que** chaque orifice de raccordement (30, 30b) est, dans la direction transversale (Q), placé côté extérieur et, dans la direction longitudinale (L), orienté globalement dans la direction du logement de patin de rail (101) et/ou devant celui-ci.

13. Coussinet de glissement (100) selon l'une des revendications 8 à 12, **caractérisé en ce qu'une** surface de glissement (102) destinée à une lame d'aiguille (112) devant pivoter dans la direction longitudinale (L) est conçue au-dessus de chaque chambre de condensation (20, 20b).

14. Coussinet de glissement (100) selon l'une des revendications 8 à 13, **caractérisé en ce que** celui-ci comporte un dessous (103) au niveau duquel est agencée une isolation thermique, le dessous (103) regardant vers le bas d'un point de vue géodésique dans la position de fonctionnement.

15. **Dispositif de chauffage d'aiguille** (200) avec au moins un échangeur de chaleur (1, 1b) selon l'une des revendications 1 à 7 ou avec un coussinet de glissement (100) selon l'une des revendications 8 à 14, l'orifice de raccordement (10) étant relié d'un point de vue hydraulique à un tube de chaleur géothermique (120).
